# EUROPEAN PATENT SPECIFICATION

(11) **EP 2 322 836 B1**
(45) Date of publication and mention of the grant of the patent: **22.08.2012**
(21) Application number: 10191533.8
(22) Date of filing: 17.11.2010
(51) Int. Cl.: F16L 55/164, F16L 55/165, F16L 55/179

(54) **Method to carry out a branching point of a pipe line under repair**
Verfahren zur Herstellung einer Abzweigstelle eines zu sanierenden Rohres
Méthode d'éxecution d'un point de bifurcation d'une conduite en réparation

(30) Priority: 17.11.2009 FI 20096193
(43) Date of publication of application: 18.05.2011
(73) Proprietor: Consti Talotekniikka OY, 06450 Porvoo (FI)
(72) Inventor: Weckström, Jan, 06450 Porvoo (FI)
(74) Representative: LEITZINGER OY

(56) References cited:
- EP-A1- 0 856 697
- EP-A2- 0 740 102
- WO-A1-01/88338
- DE-A1- 4 115 563

## Description

The present invention relates to a method to carry out a branching point of a pipe line under repair.

A variety of solutions exist in the market for the renovation of plumbing systems in residential buildings and other such projects. The most popular method continues to be the replacement of outdated pipes with new ones, either by dismantling the aged ones and installing the new ones in the same positions, or by laying the new pipes along new routes, thus enabling at least some of the existing pipes to remain in place. These methods require a lot of work for exposing the pipes and for installing new pipes, as well as for renewing surface structures because of plumbing renovation. In addition, inhabitants are thereby subjected to considerable hardship during plumbing renovation in residential buildings, and normally inhabitants are forced to vacate their residences for the duration of a renovation project.

Alongside such a renovation process, which is laborious and, e.g. in the case of residential buildings, nerve-racking for inhabitants, have emerged a variety of methods taking less time and involving less dismantling operations, wherein pipe lengths to be repaired are coated/provided with a sock liner. The sock lining method makes use of a sock, having on its internal surface e.g. a polyurethane film, and being soaked with a suitable hardener-mixed mass, such as e.g. epoxy, polyurethane, polyester or polyurea, whereby the sock is inserted into a pipe length under repair by pushing, pulling, or blowing compressed air. Upon setting, the sock establishes a substantially integral pipe lining, which is ultimately opened at one or more branch pipes possibly included therein.

One problem with this method is that the branch points fail to receive a proper treatment in the sock lining process of pipes. In the renovation of e.g. sewer lines, the bottom sewer is first to receive a sock liner, then the branch points are opened by drilling, and finally the branch pipes are provided with a sock liner. Hence, between the branch pipe sock and the main sewer sock is left an untreated area of varying size depending on the intersecting angle of a branch pipe and constituting the weakest link in a restored sewer system.

In the event that the branch point is not leak-proof, the sewer system may have ground water intruding therein. When a ground-supported pipe corrodes from outside, there is a hazard of the untreated branch point rusting through at some point in time and clogging the pipe with landfill. This results in a sewer blockage, and at this stage the pipe can no longer be cleaned sufficiently for the installation of a hat profile/branch connection.

In case of vertical sewer lines, the branch points of residence-specific sewers become generally more corroded than the actual pipes. Therefore, the branch point is usually the first to develop a hole, causing water damage.

In order to overcome these problems, there are hat profiles and branch connections in the market, which nevertheless require trenches and chipping to expose the same. In addition, these must be installed by way of the main sewer and the installation is limited by a distance to the targeted branch point. The upper limit for the distance of a branch connection is about 30 m from the trench or the point at which it is exposed by chipping. There are further problems in these prior known solutions with regard to attachment. The hat profiles and branch connections shall not be installed until after the insertion of a sock. Consequently, the attachment surface is made up by an internal surface film of the sock, which is intentionally designed for not having anything easily adhering to it. Generally, the film material comprises polyurethane, polypropylene, PVC, or any combination thereof.

Pipe system bends are a source of major problems. The installation of hat profiles or branch connections is impossible e.g. in the event of having 90° bends in larger pipes (0 150 mm) or 45° bends in smaller pipes (0 100 mm). In addition, such items are truly difficult and tedious to install. The rate of total success is low. Generally, wrinkles of some sort appear and/or the branch connection is not absolutely waterproof. If there are several branches at one location, the successful outcome is even less likely.

Even when apparently leak-proof at the time of installation, the branch connection may become detached over time as a result of thermal fluctuations and/or mobility of the pipes. In this case, the branch connection, particularly one established by a hat profile, finds its way into the main sewer, causing obstructions and water damage. The removal of such an obstruction requires expensive special-purpose tools and plenty of time.

It is of utmost importance for the branch connection to provide a leak-proof joint at the junction between a trunk pipe and a branch pipe. This joint must not leak under the effect of thermal movement and contractions. The result is a leaking joint, as well as rusting. The result of rusting is in turn swelling, which diminishes the internal pipe dimension and increases the risk of blockage. In order to provide a joint that has a leak-proof branch connection, the latter must extend beyond the trunk pipe and the branch pipe.

The problem has also been addressed by proposing measures, wherein a mass casting process is used for providing the pipe interior with internal surface structures conforming to the internal surfaces of the original pipes and being used for making a replacement tubing and preventing the occurrence of leaks. For example, publication JP2002340272A discloses a method, wherein a branch connection is repaired by means of a pour casting to be formed in an interior of the pipes within the branch connection region. In the method, inside a main pipeline to be repaired is first introduced a smaller diameter tube, which is used as a mold. Hence, the inside tube must have an outer diameter which is smaller than the inner diameter of the original pipe. As a result, the pipe to be repaired and the inside tube develop an intermediate volume, which is filled with casting mass. The mass sets in time and thereby the pipe to be repaired will be provided along its internal surface with a new "pipe". In the region of a branch connection, however, the branch pipe is filled completely with casting mass from the connection onwards up to a desired distance. After the mass has set, the branch pipe must be opened by drilling a borehole in the cured mass, said hole matching a flow channel desired therefor.

First of all, such solutions based on massive casting are tedious to carry out. Before an opening can be drilled in a branch connection, it is mandatory to wait for the high thickness casting mass to cure. The method creates also an immense amount of required drilling work because of the necessity to drill openings in branch pipes filled by pour casting. Drilling an opening in the connection after curing may also prove a difficult and tedious task should the connection lie in a hard-to-access location. In a worst case scenario, the pipe may have a curved configuration which may render the performance of drilling almost impossible.

Another deficiency in the method is the fact that the new pipe will be distinctly smaller than the original line. The new pipe has an inner diameter which is not more than equal to the outer diameter of an inner tube used in casting. This increases the risk of pipe blockage over time. Also, the joint established at a branch connection is not particularly flexible, and ruptures occur easily as the pipes undergo movements for example as a result of thermal expansion.

A practical implementation of the method is further hampered in the event that the branch connection extends at a low angle relative to the main pipe, or extends for the most part in a horizontal direction only. In this case, it is difficult to successfully retain the casting mass over the entire cross-sectional area of the pipe. The mass has always a tendency of trickling downward, whereby the pipe's upper surface is easily left without any mass contact at all, and thereby exposed. If it is desirable to provide a mass coverage across the entire branch point, it will be necessary to use an appropriate stopper system for disallowing a mass flow away from the area, or else the pipe must be filled over a very long-distance length indeed. This increases the required amount of drilling work even further, and imposes even more stringent precision requirements for the drilling operation.

On the other hand, publication DE4115563A1 discloses a method, wherein a mass is likewise delivered onto the internal surfaces of pipes and the mass is forced to the conformity with internal surface formations of the pipes by means of an inflated hose. This is followed by withdrawing the hose and allowing the mass to set. The process is repeated until a desired overall formation of mass layers is obtained. A practical implementation of the solution is slowed down by a setting period required between the processes of forming the mass layers. Likewise, therein, the entire structure has its strength depending solely on the mass layers and the load-bearing capacity thereof.

EP 0740102 A2 discloses a further prior art method.

Accordingly, it is an objective of the present invention to provide a method, which enables making branch points leak-proof in a reliable and durable manner, particularly when dealing with a sock lining method. In order to achieve this objective, a method according to the invention is characterized in that the method comprises applying a pipe lining mass to the branch point in such a way that it extends in a main pipe in either direction from the branch point and into a branch pipe, establishing a substantially integral branch connection, that at least one of the pipe lengths arriving at the branch point is renovated with a per se known sock lining method by edging a sock to its position prior to setting of the pipe lining mass, such that the renovation sock extends at least partially over the part of branch connection present in the discussed pipe length, and that the material for a mass used in the sock is selected on the basis of its compatibility with the pipe lining mass, such that the renovation sock and the branch connection establish with each other a substantially integral jointless conjunction upon setting of the masses contained therein.

The invention will now be described more closely with reference to the accompanying drawings, in which:

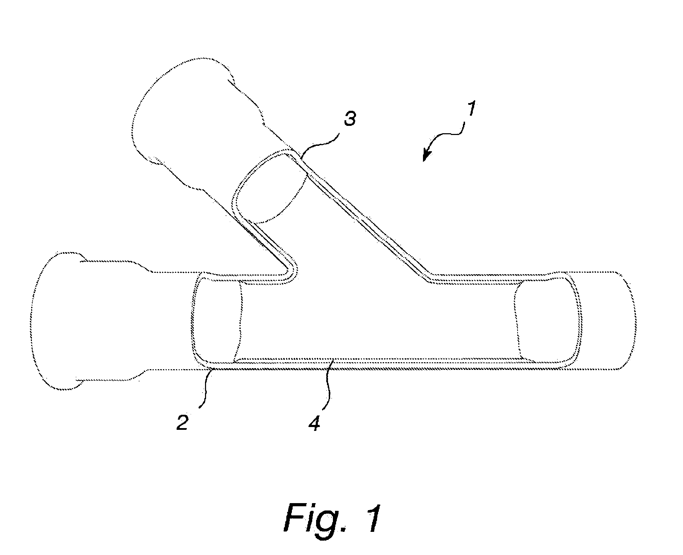

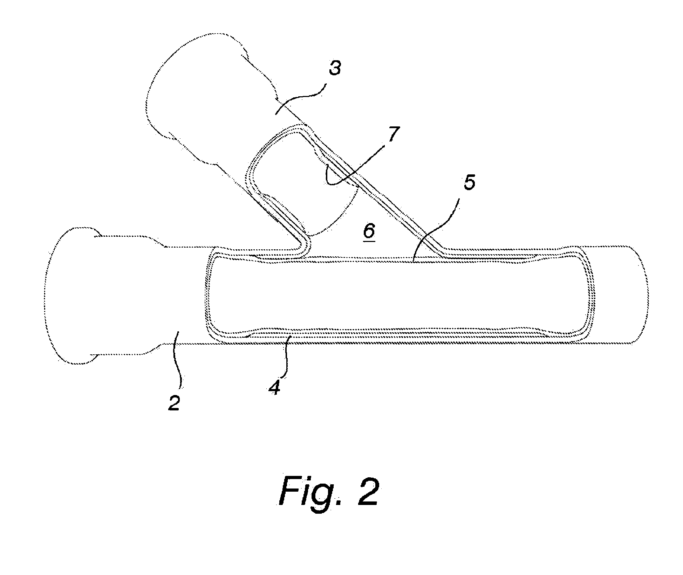

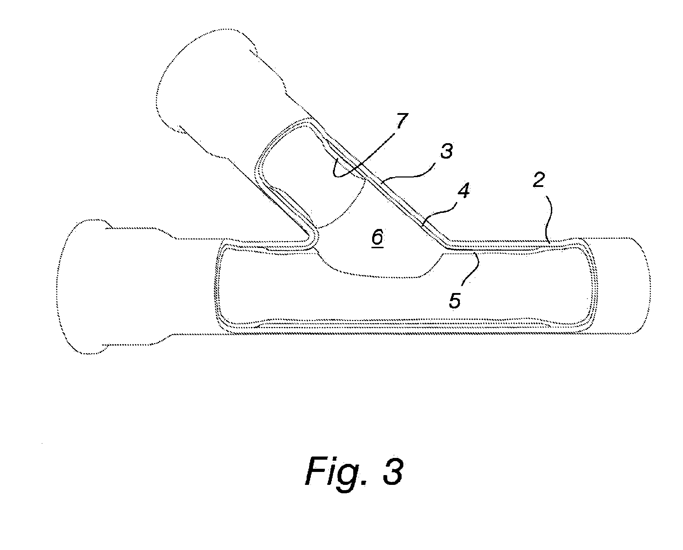

figs. 1-3 show in schematic views of principle the various stages of making a branch point of the invention in a partially cut-away views.

Fig. 1 shows in a schematic cut-away view a branch point 1 between a main pipe 2 and a branch pipe 3 after the washing/cleaning and drying of a pipe system and the subsequently performed application of a pipe lining mass 4.

Fig. 2 shows the branch point 1 after the setting of a sock 5 inserted in the main pipe 2, thus establishing a structure which extends beyond the branch point in the form of an integral pipe. Reference numeral 7 represents a sock inserted in the branch pipe 3.

Fig. 3 shows the branch point 3 after opening the internal pipe 5 present in the main pipe, making the branch point ready for service. The pipe lining mass 4 has established a substantially integral, jointless connection with the sock 5 of the main pipe 2 and that 7 of the branch pipe 3. A region 6 between the socks 5 and 7 makes up a part of the branch connection, which consists of the pipe lining mass 4 and which is a flexible and sturdy element. The lower limit for its thickness is preferably about 0,5 mm, more preferably about 1 mm. The upper limit is preferably about 5 mm.

When using the method according to the invention in a process of preparing branch points, there are no problems caused by the diversity of branches or the number of branches. The pipe lining mass, making up a branch connection, is inserted preferably by way of the branches with no need for trenches or chipping work in order to expose the pipe.

The pipe lining mass is placed in a branch point, and in pipes arriving thereat, in such a way that it extends from the branch point preferably about 5 to 20 cm in every direction, depending on the size of a pipe and on the measuring point.

The renovation of e.g. a sewer line can be carried out by using the method of the invention as follows. The first step is cleaning a bottom sewer and a branch pipe/pipes. Once the pipes have dried, a special-purpose tool is inserted by way of the branch pipe all the way to a branch point. The work is begun by applying a pipe lining mass inside a main sewer section at the branch point and continued upward into the branch pipe. The most preferred application method is brushing, but the mass can also be applied by spraying, a centrifugal applicator, or a rotary applicator.

The pipe lining mass is time-curable. Prior to its complete curing, preferably immediately after applying the mass, the main sewer is sock-lined across the branch point and the branch pipe is sock-lined up to the branch point by using either an open- or close-ended sock. The sock can be pulled to its position or inserted into the pipe by means of compressed air, as the case may be. Then, the system is allowed to set. The setting time after a CIPP (cured-in-place pipe) process varies, depending on the applied hardener and temperature, typically within the range of about 2 to 8 h. During the setting process, the mutually overlying mass layers present in a branch connection and renovation socks "fuse" in response to a chemical reaction into one and the same jointless unit. Hence, two different types of mass blend with each other at the boundary surface thereof, whereby the materials become sort of welded to each other. This makes for a strong and highly stress-bearing structure.

After setting, the branch point/points are drilled for an opening the same by means of a purpose-designed branch drill, providing a drilling result in millimeter-scale precision, whereafter the system is ready for service.

If the pipe length to be renovated features a plurality of branches, the entire length is first cleaned, and the sock-lining process is preceded by applying to all branch points a pipe lining mass which establishes a branch connection.

The branch pipe can also be renovated by a method other than sock lining technique as long as such method is applicable with the employed pipe lining mass. The branch pipe can be treated e.g. with the same pipe lining mass as that, e.g. epoxy, used in the branch connection. In this case, the branch pipe is treated preferably continuously with the formation of a branch connection. The mass can also consist of some other mass compatible with that used in the branch connection, whereby said masses, upon setting, establish an integral, jointless connection with each other.

The end result is a totally self-supporting, sturdy, yet flexible branch, which is capable of tolerating the stress induced by a possible movement of the pipe system. The branch is implementable quickly in a single continuous work process without waiting periods between working operations. The internal dimensions of a concurrently produced branch are substantially consistent with the original internal dimensions of the pipes, thereby not limiting the original flowing capacity and avoiding the increased risk of blockage.

## Claims

1. A method to carry out a branching point (1) of a pipe line under repair, **characterized in that**
the method comprises applying a pipe lining mass (4) to the branch point (1) in such a way that it extends in a main pipe (2) in either direction from the branch point and into a branch pipe (3), establishing a substantially integral branch connection,
that at least one of the pipe lengths arriving at the branch point is renovated with a per se known sock lining method by edging a sock (5, 7) to its position prior to setting of the pipe lining mass (4), such that the renovation sock extends at least partially over the part of branch connection present in the discussed pipe length (2, 3),
and that the material for a mass used in the sock (5, 7) is selected on the basis of its compatibility with the pipe lining mass (4), such that the renovation sock and the branch connection establish with each other a substantially integral jointless conjunction upon setting of the masses contained therein.

2. A method according to claim 1, **characterized in that** the method comprises sock-lining the main pipe (2) in such a way that the renovation sock (5) extends across one or more branch points (1) so as to establish, after setting, a substantially continuous internal tubing in the main pipe, said internal tubing being finally opened into the branch pipe/pipes (3).

3. A method according to claim 2, **characterized in that** at least one branch pipe (3) is renovated by a sock lining method.

4. A method according to claim 2, **characterized in that** at least one branch pipe (3) is renovated by applying to an internal surface of the branch pipe, across the entire length of a branch pipe section to be renovated, a pipe lining mass which is the same as the mass (4) used for the branch connection or some other mass compatible with that making up the branch connection.

## Patentansprüche

1. Verfahren zum Ausführen einer Abzweigstelle (1) einer in Reparatur befindlichen Rohrleitung, **dadurch gekennzeichnet, dass**
das Verfahren das Aufbringen einer Rohrauskleidungsmasse (4) auf die Abzweigstelle (1) auf eine solche Weise, dass sie sich in einem Hauptrohr (2) in beiden Richtungen von der Abzweigstelle aus und in das Abzweigrohr (3) erstreckt, wobei eine im Wesentlichen integrale Abzweigverbindung hergestellt wird, umfasst,
dass wenigstens eine der an derAbzweigstelle ankommenden Rohrlängen mit einem an sich bekannten Schlauchauskleidungsverfahren erneuert wird, durch das Schieben eines Schlauchs (5, 7) an seine Position vor dem Aushärten der Rohrauskleidungsmasse (4) derart, dass sich der Erneuerungsschlauch wenigstens teilweise über den in der behandelten Rohrlänge (2, 3) vorhandenen Teil der Abzweigverbindung erstreckt,
und dass das Material für eine in dem Schlauch (5, 7) verwendete Masse auf der Grundlage seiner Verträglichkeit mit der Rohrauskleidungsmasse (4) ausgewählt ist derart, dass derErneuerungsschlauch und die Abzweigverbindung nach dem Aushärten der in denselben enthaltenen Massen miteinander eine im Wesentlichen integrale nahtlose Verbindung herstellen.

2. Verfahren nach Anspruch 1, **dadurch gekennzeichnet, dass** das Verfahren das Schlauchauskleiden des Hauptrohres (2) auf eine solche Weise umfasst, dass sich der Erneuerungsschlauch (5) über eine oder mehrere Abzweigstellen (1) erstreckt, um so, nach dem Aushärten, eine im Wesentlichen durchgehende innere Verschlauchung in dem Hauptrohr herzustellen, wobei dieinnere Verschlauchung schließlich in das/die Abzweigrohr/-rohre (3) geöffnet wird.

3. Verfahren nach Anspruch 2, **dadurch gekennzeichnet, dass** wenigstens einAbzweigrohr (3) durch ein Schlauchauskleidungsverfahren erneuert wird.

4. Verfahren nach Anspruch 2, **dadurch gekennzeichnet, dass** wenigstens einAbzweigrohr (3) erneuert wird durch das Aufbringen einer Rohrauskleidungsmasse, welche die gleiche ist wie die für die Abzweigverbindung verwendete Masse (4) oder eine andere Masse, die mit derjenigen verträglich ist, welche dieAbzweigverbindung ausmacht, auf eine Innenfläche des Abzweigrohres, über die gesamte Länge des zu erneuerndenAbzweigrohrabschnitts.

## Revendications

1. Procédé d'exécution d'un point de bifurcation (1) d'une conduite en réparation, **caractérisé en ce que**
le procédé comprend l'application d'une masse de conduite (4) au point de bifurcation (1) de telle manière qu'elle s'étende dans une conduite principale (2) dans l'une ou l'autre direction depuis le point de bifurcation et dans une conduite de bifurcation (3), établissant une connexion de bifurcation essentiellement intégrale,
qu'au moins une des longueurs de conduite arrivant au point de bifurcation est réparée avec un procédé connu en soi de revêtement par manchon en bordant un manchon (5, 7) à sa position, avant la prise de la masse de conduite (4), de telle manière que le manchon de réparation s'étende au moins partiellement au-dessus de la partie de la connexion de bifurcation présente dans la longueur de conduite (2, 3) en question,
et **en ce que** le matériau pour une masse utilisée dans le manchon (5, 7) est sélectionné sur la base de sa compatibilité avec la masse de conduite (4), de telle façon que le manchon de réparation et la connexion de bifurcation établissent l'un avec l'autre une conjonction essentiellement sans jointure à la prise des masses contenues à l'intérieur.

2. Procédé selon la revendication 1, **caractérisé en ce que** le procédé comprend de revêtir d'un manchonla conduite principale (2) de telle façon que le manchon de réparation (5) s'étende à travers un ou plusieurs points de bifurcation (1) de façon à établir, après la prise, une tubulure interne essentiellement continue dans la conduite principale, la tubulure interne étant ensuite ouverte dans la/les conduite(s) de bifurcation (3).

3. Procédé selon la revendication 2, **caractérisé en ce qu'**au moins une conduite de bifurcation (3) est réparée par un procédé de revêtement par manchon.

4. Procédé selon la revendication 2, **caractérisé en ce qu'**au moins une conduite de bifurcation (3) est réparéeen appliquant, sur une surface intérieure de la conduite de bifurcation à travers toute la longueur d'une section de conduite de bifurcation à réparer,une masse de conduite qui est la même que la masse (4) utilisée pour la connexion de bifurcation ou une autre masse compatible avec celle effectuant la connexion de bifurcation.
